# EUROPEAN PATENT SPECIFICATION

(11) **EP 1 872 350 B1**
(45) Date of publication and mention of the grant of the patent: **13.01.2010**
(21) Application number: 06740833.6
(22) Date of filing: 11.04.2006
(51) Int. Cl.: G08C 17/02

(54) **SYSTEM AND METHOD FOR DETERMINING A RECEIVER THRESHOLD FOR A TRAINABLE TRANSMITTER SYSTEM**
SYSTEM UND VERFAHREN ZUM BESTIMMEN DES SCHWELLWERTES EINES EMPFÄNGERS FÜR EIN TRAINIERBARES ÜBERTRAGUNGSSYSTEM
SYSTEME ET PROCEDE POUR DETERMINER UN SEUIL DU RECEPTEUR POUR UN SYSTEME D'EMETTEUR CAPABLE D'APPRENTISSAGE

(30) Priority: 12.04.2005 US 104398
(43) Date of publication of application: 02.01.2008
(73) Proprietor: Johnson Controls Technology Company, Holland, MI 49423 (US)
(72) Inventor: REENE, Jason, L., Holland, Michigan 49424 (US)
(74) Representative: Wolff, Felix
(86) International application number: PCT/US2006/013365
(87) International publication number: WO 2006/110682

(56) References cited:
- WO-A2-2004/077729
- DE-A1- 10 259 590
- US-A- 5 193 210

## Description

### FIELD OF THE INVENTION

The present invention relates generally to the field of trainable transmitters and transceivers for use with vehicles. More specifically, the present invention relates to trainable transceivers that are configured for use with remote control systems.

### BACKGROUND OF THE INVENTION

Electronically operated remote control systems, such as garage door opener systems, home security systems, home lighting systems, gate controllers, etc., typically employ a portable, hand-held transmitter (i.e., an original transmitter) to transmit a control signal to a receiver located at the remote control system. For example, a garage door opener system typically includes a receiver located within a home owner's garage and coupled to the garage door opener. A user presses a button on the original transmitter to transmit a radio frequency signal to the receiver to activate the garage door opener to open and close a garage door. Accordingly, the receiver is tuned to the frequency of its associated original transmitter and demodulates a predetermined code programmed into both the original transmitter and the receiver for operating the garage door. To enhance security of wireless control systems, such as a garage door opener system, manufacturers commonly use encryption technology to encrypt the radio frequency signal sent from a transmitter to a receiver. One such encryption method is a rolling code system, wherein each digital message sent from the transmitter to the receiver has a different code from the previous digital message.

As an alternative to a portable, hand-held original transmitter, a trainable transmitter or transceiver may be provided in a vehicle for use with remote control systems. A trainable transmitter is configurable by a user to activate one or more of a plurality of different wireless control system receivers using different radio frequency messages. A user trains the trainable transmitter to an existing original transmitter by holding the two transmitters in close range and pressing buttons on the original transmitter and the trainable transmitter. The trainable transmitter identifies the type of remote control system associated with the original transmitter based on a radio frequency signal received from the original transmitter. For example, the trainable transmitter may identify and store the control code and RF carrier frequency of the original transmitter radio frequency control signal. In addition, the receiver may learn a transmitter identifier of the trainable transmitter. For systems employing a rolling code (or other encryption method), the trainable transceiver and receiver must also be "synchronized" so that the counters of the trainable transmitter and the receiver begin at the same value. Accordingly, the user presses a button on the remote control system receiver to put the receiver in a training mode. A button on the trainable transceiver may then be pressed, for example, two to three times, to transmit messages so the receiver may learn the transmitter identifier, complete synchronization of the receiver and the trainable transmitter and confirm that training was successful. Once trained, the trainable transceiver may be used to transmit RF signals to control the remote control system. Such a trainable transmitter is disclosed in WO 2004/077 729.

As mentioned, during a training process of the trainable transmitter, a radio frequency signal from an original transmitter is received by the trainable transmitter. Accordingly, the trainable transmitter includes or is coupled to a receiver (or alternatively is a transceiver including receive circuitry) used to receive the radio frequency signal from the original transmitter. The receiver uses a receiver threshold to receive incoming signals. Typically, a receiver threshold is a set voltage level used by a receiver to identify when data is modulated on an incoming analog signal and to convert the data of the analog signal to digital data (e.g., to identify if the incoming signal represents a 0 or a 1). A receiver threshold (e.g., a threshold voltage) may be calculated and programmed into the trainable transmitter during manufacture of the trainable transmitter. The pre-programmed receiver threshold is then used by the receiver during each subsequent training attempt for the trainable transmitter to receive incoming signals. If, however, the predetermined receiver threshold value is incorrect or programmed incorrectly, the training performance of the trainable transmitter may be adversely affected. For example, if the pre-programmed receiver threshold is too high or too low, reception of an incoming signal may not be possible.

### SUMMARY OF THE INVENTION

In accordance with an embodiment, a method for determining a receiver threshold for a trainable transmitter includes receiving a request to enter a training mode from a user, determining a noise level for a frequency range of a receiver of the trainable transmitter, and selecting a receiver threshold based on the noise level.

In accordance with another embodiment, a trainable transmitter includes a receiver circuit configured to receive signals, and a control circuit coupled to the receiver circuit and configured to determine a noise level for a frequency range of the receiver circuit and to select and provide a receiver threshold to the receiver circuit, the receiver threshold being variable based on the noise level.

In accordance with another embodiment, a method for training a trainable transmitter includes receiving a request to enter a training mode from a user, determining a noise level for a frequency range of a receiver of the trainable transmitter, selecting a receiver threshold based on the noise level, providing the receiver threshold to the receiver of the trainable transmitter, and beginning the training mode of the trainable transmitter.

### BRIEF DESCRIPTION OF THE DRAWINGS

FIG. 1 is a perspective view of a vehicle having a trainable transmitter in accordance with an embodiment.

FIG. 2 is a schematic block diagram of a trainable transmitter in accordance with an embodiment.

FIG. 3 illustrates a method for training a trainable transmitter in accordance with an embodiment.

FIG. 4 illustrates a method for determining a receiver threshold for a receiver of a trainable transmitter in accordance with an embodiment.

FIGS. 5A-5C are an exemplary graphical representation of an adaptive receiver threshold in accordance with an embodiment.

### DETAILED DESCRIPTION OF THE PREFERRED EMBODIMENTS

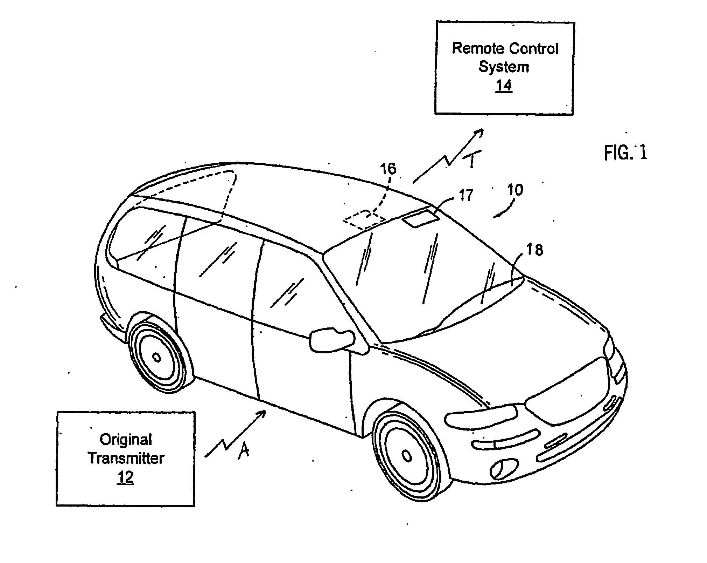

Figure 1 is a perspective view of a vehicle including a trainable transmitter in accordance with an embodiment. A vehicle 10, which may be an automobile, truck, sport utility vehicle (SUV), mini-van, or other vehicle, includes a trainable transmitter 16. In alternative embodiments, a trainable transmitter may be embodied in other systems such as a portable housing, key fob, key chain or other hand-held device. In Figure 1, trainable transmitter 16 is illustrated mounted to an overhead console of vehicle 10. Alternatively, one or more of the elements of trainable transmitter 16 may be mounted to other vehicle interior elements such as a visor 17, an instrument panel 18, a rearview mirror (not shown), a dashboard, seat, center console, door panel, or other appropriate location in the vehicle.

Trainable transmitter 16 may be configured to control a remote control system 14, such as a garage door opener, home security system, home lighting system, gate controller, etc. Trainable transmitter 16 is trained using an original transmitter 12 used to control remote control system 14. Original transmitter 12 is a transmitter, typically a hand-held transmitter, which is sold with remote control system 14 or as an after-market item, and which is configured to transmit an activation signal at a predetermined carrier frequency and having control data configured to actuate remote control system 14. For example, original transmitter 12 can be a hand-held garage door opener transmitter configured to transmit a garage door opener signal at a frequency, such as 355 Megahertz (MHz), wherein the activation signal has control data, which can be fixed code or cryptographically-encoded code (e.g., a rolling code). In this example, remote control system 14 may be a garage door opener system configured to open a garage door in response to receiving the activation signal from original transmitter 12. Accordingly, remote control system 14 includes an antenna (not shown) for receiving wireless signals including control data which would control remote control system 14.

To train trainable transmitter 16, an activation or control signal A is transmitted from original transmitter 12 to trainable transmitter 16 in the vehicle 10. Trainable transmitter 16 receives the control signal, identifies the control data (e.g., fixed or rolling code data) and carrier frequency of the control signal and stores this information for later retransmission. Trainable transmitter 16 may then be used to selectively generate and transmit a control signal T with the learned frequency and control data to the remote control system 14, such as a garage door opener, that is responsive to the control signal. The training and operation of trainable transmitter 16 is discussed in further detail below.

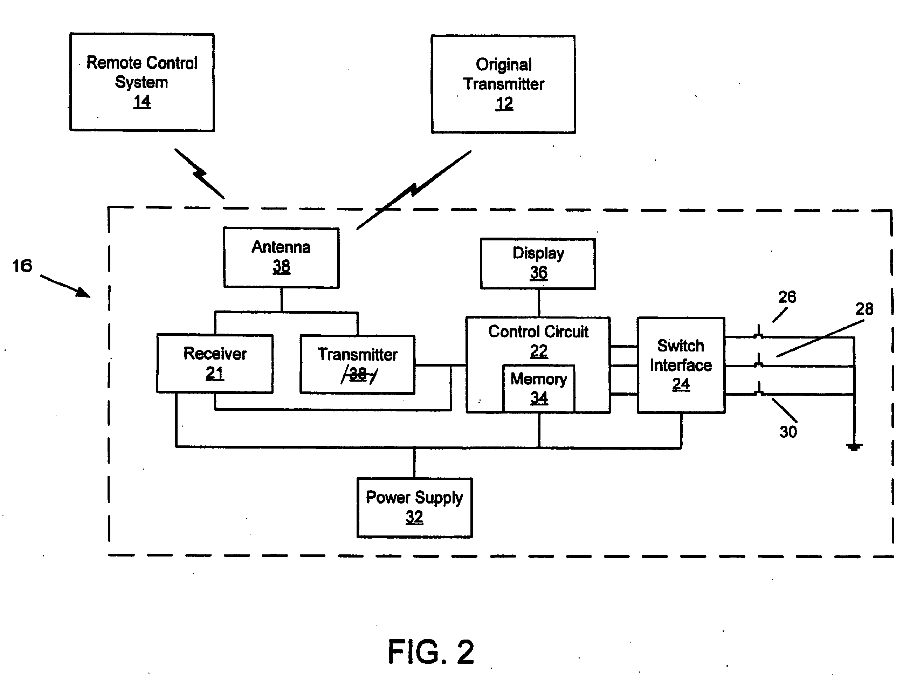

Figure 2 is a schematic block diagram of a trainable transmitter in accordance with an embodiment. Trainable transmitter 16 includes a transmitter circuit 20 and a receiver 21 that are coupled to an antenna 38. In another embodiment, a single dual function transceiver having transmit and receive circuitry may be provided in place of a separate receiver and transmitter. Transmitter circuit 20 and receiver 21 are also coupled to a control circuit 22. Control circuit 22 may include various types of control circuitry, digital and/or analog, and may include a microprocessor, microcontroller, application specific integrated circuit (ASIC), or other digital and/or analog circuitry configured to perform various input/output, control, analysis, and other functions to be described herein. A switch interface 24 is coupled to a plurality of buttons or switches. Alternatively, other user input devices such as knobs, dials, etc., or a voice actuated input control circuit configured to receive voice signals from a vehicle occupant may be provided to receive user input. In an exemplary embodiment, switch interface 24 is coupled to one terminal of each of three push button switches 26, 28 and 30, which have their remaining terminal connected to ground. Switches 26, 28 and 30 may each be associated with a separate remote control system to be controlled, each of which may have its own unique operating RF frequency, modulation scheme, and/or control data. Thus, switches 26, 28 and 30 each correspond to a different radio frequency channel for transmitter circuit 20. It should be understood, however, that each channel may be trained to the same original transmitter, if desired, or to different original transmitters.

Interface circuit 24 couples signal information from switches 26, 28 and 30 to the input terminals of control circuit 22. Control circuit 22 includes data input terminals for receiving signals from the switch interface 24 indicative of the closure states of switches 26, 28 and 30. A power supply 32 is conventionally coupled to the various components for supplying the necessary operating power in a conventional manner.

Control circuit 22 is also coupled to a display 36 which includes a display element such as a light emitting diode (LED). Display 36 may alternatively include other display elements, such as a liquid crystal display (LCD), a vacuum fluorescent display (VFD), or other display elements. Control circuit 22 includes a memory 34 including volatile and/or non-volatile memory to, for example, store a computer program or other software to perform the functions described herein. Memory 34 is configured to store learned information such as control data and carrier frequency information that may be associated with switches 26, 28 and 30. In addition, for rolling code or other cryptographically encoded remote control systems, information regarding the rolling code or cryptographic algorithms for each system may be pre-stored and associated with frequencies and control data that may be used to identify a particular type of remote control system and, therefore, the appropriate cryptographic algorithm for the remote control system. As discussed previously, each switch or button 26, 28 and 30 may be associated with a separate remote control system, such as different garage door openers, electronically operated access gates, house lighting controls and other remote control systems, each which may have its own unique operating RF frequency, modulation scheme and control data.

Transmitter circuit 20 and receiver 21 communicate with the remote control system 14 and the original transmitter 12 via antenna 38. Receiver 21 may be used to receive signals via antenna 38 and transmitter circuit 20 may be used to transmit signals via antenna 38. In an alternative embodiment, a separate antenna may be used with transmitter 20 and with receiver 21 (e.g., separate transmit and receive antennas may be provided in the trainable transmitter). Once a channel of trainable transmitter 16 has been trained, trainable transmitter 16 is configured to transmit a wireless control signal having control data that will control remote control system 14. For example, in response to actuation of a switch, such as switch 26, transmitter circuit 20 is configured, under control from control circuit 22, to generate a control signal having a carrier frequency and control data associated with the particular trained channel. The control data may be modulated onto the control signal using; for example, frequency shift key (FSK) modulation, amplitude shift key (ASK) modulation or other modulation technique. The control data on the control signal may be a fixed code or a rolling code or other cryptographically encoded control code suitable for use with remote control system 14. As mentioned previously, trainable transmitter 16 may learn the control code and carrier frequency for remote control system using original transmitter 12 for remote control system 14.

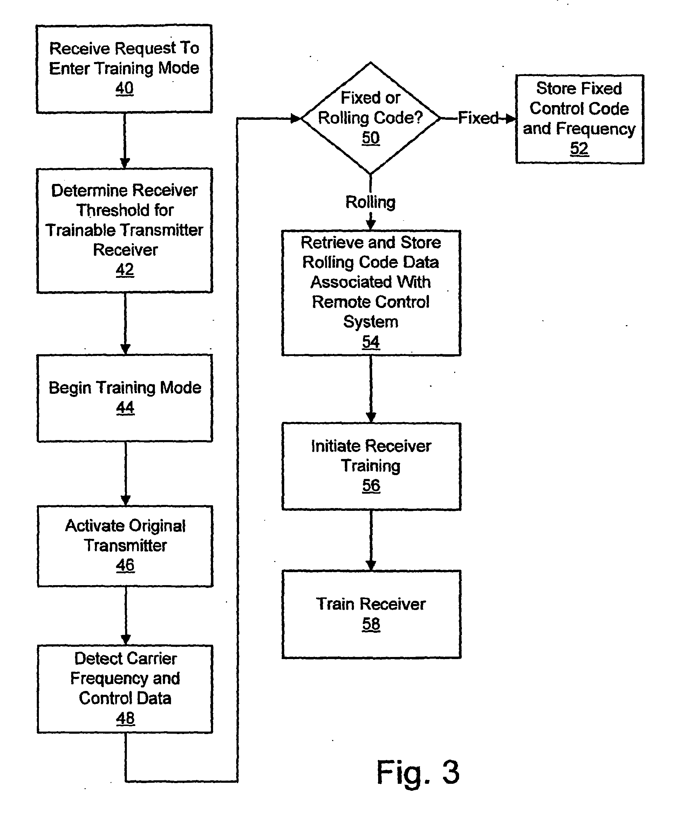

Figure 3 illustrates a method for training a trainable transmitter in accordance with an embodiment. At block 40, a request to enter a training mode is received from a user at the trainable transmitter. For example, a user may provide a request by actuating a pushbutton (e.g., pushbutton 26 in Figure 2) of the trainable transmitter. In one embodiment, the user holds the pushbutton until feedback is provided that the training of the channel is complete. Alternatively, the user may hold the pushbutton for a predetermined amount of time (e.g., 3 seconds, 10 seconds, etc.). A display may be used to indicate to the user that a training mode was initiated, for example, a display element such as an LED indicator may flash to provide feedback to the user. In addition, the display element may be used to indicate that the channel is trained (e.g., an LED may flash rapidly). In alternative embodiments, a request to enter a training mode may be provided by a combination of key presses using input devices of the trainable transmitter, by receiving a message on a vehicle bus, upon receipt of a control signal from the original transmitter or by selecting a menu item on a display. At block 42, a receiver threshold value (e.g., a receiver threshold voltage) is determined for the trainable transmitter receiver 21 (shown in Figure 2).

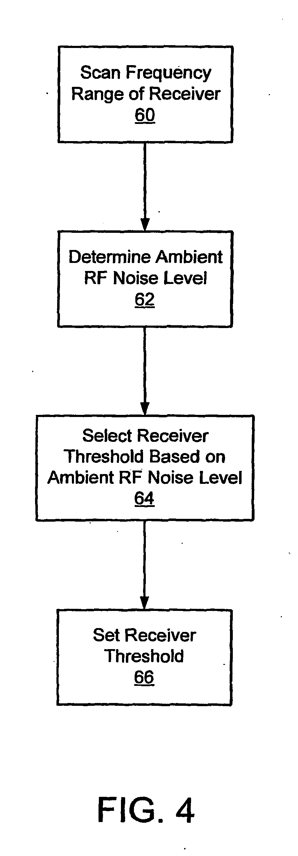

Figure 4 illustrates a method for determining a receiver threshold value for a trainable transmitter in accordance with an embodiment. At block 60, the trainable transmitter receiver scans the frequency range of the receiver to check the ambient noise level. In one embodiment, receiver 21 in conjunction with control circuit 22 (shown in Figure 2) takes periodic samples (e.g., at predetermined intervals) of the ambient noise level across the frequency range of the receiver. For example, samples of the ambient noise level may be taken at regular intervals of frequency across the frequency range of the receiver. In one embodiment, samples of a Received Signal Strength Indicator (RSSI) are taken across the frequency range to determine the ambient noise level. At block 62, the ambient RF noise level across the range of frequencies is determined. For example, the average intensity or value of ambient RF noise in the frequency range of the receiver may be determined (e.g., calculated) using methods generally known in the art. In one embodiment, control circuit 22 (shown in Figure 2) is configured to determine an average RF noise level by calculating the average of the samples taken during the scan of the receiver's frequency range. In another embodiment, an offset may be added to the average RF noise level. Once the ambient RF noise level (e.g., the average value of ambient RF noise) across the frequency range of the trainable transmitter receiver is determined, a receiver threshold value (e.g., a voltage level) is selected based on the ambient noise level at block 64. For example, an optimal receiver threshold may be chosen based on the ambient noise level. Preferably, the receiver threshold is chosen to be at or above the average RF noise level.

The receiver threshold value is set at block 66. For example, control circuit 22 (shown in Figure 2) may be configured to provide an analog voltage level representing the selected receiver threshold value to the receiver 21 (shown in Figure 2). In one embodiment, the receiver threshold is generated by the control circuit using a PWM output and an RC (receiver-capacitor) circuit. Alternatively, a digital to analog converter (DAC) circuit element may be used instead of the discrete hardware components or other known methods of generating an analog voltage level may be used. Control circuit 22 (shown in Figure 2) generates a digital signal (e.g., a PWM output) at varying duty cycles. The duty cycle is selected to provide the appropriate receiver threshold voltage level. The digital signal is then provided to the RC circuit which converts the digital signal into an analog voltage level (i.e., the receiver threshold). The receiver threshold voltage level is then provided to the receiver 21 (shown in Figure 2) of the trainable transmitter. Preferably, a receiver threshold is determined at the beginning of each training attempt or cycle of the trainable transmitter. Accordingly, the receiver threshold may be adapted to the noise conditions and environment in which the trainable transmitter is being trained.

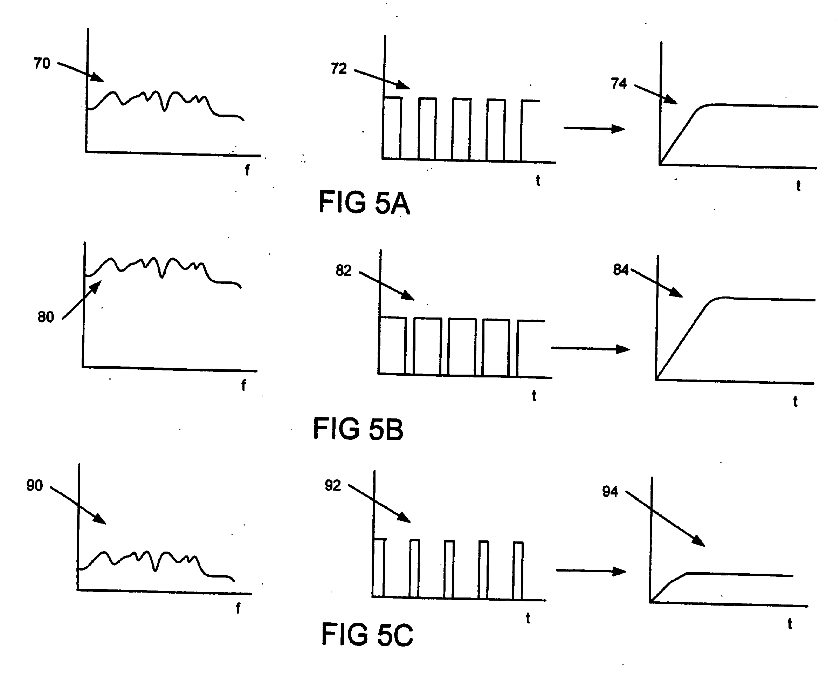

Figures 5A-5C are an exemplary graphical representation of an adaptive receiver threshold in accordance with an embodiment. Figure 5A shows an ambient noise level 70 determined by the trainable transmitter and a digital signal 72 (e.g., a PWM output) generated in response to the determined noise level 70 to set a receiver threshold 74 in a first training cycle. As discussed above, digital signal 72 is converted to an analog voltage level 74. Figure 5B shows a high ambient noise level 80 determined by the trainable transmitter and a digital signal 82 (e.g., a PWM output) generated in response to the determined noise level 80 to set a receiver threshold 84 for in second training cycle. As discussed above, digital signal 82 is converted to an analog voltage level 84. Figure 5C shows a low ambient noise level 90 determined by the trainable transmitter and a digital signal 92 generated in response to the determined noise level 90 to set a receiver threshold 94 in a third training cycle. As discussed above, digital signal 92 is converted to an analog voltage level 94. Accordingly, the receiver threshold may be adapted to the noise conditions and environment at each training cycle of the trainable transmitter.

Returning to Figure 3, at block 44, the trainable transmitter enters a training mode and begins looking for a control signal to train the channel. In an exemplary embodiment, an original transmitter is brought within the vicinity of the trainable transmitter and activated to send an RF control signal at block 46 (e.g., a user input device of the original transmitter is actuated). At block 48, the trainable transmitter may receive the control signal from the original transmitter, demodulate the control signal and identify the control data and carrier frequency of the control signal. The trainable transmitter receiver uses the receiver threshold determined prior to entering the training mode when receiving control signals. In particular, the receiver compares the incoming signal to the receiver threshold. In one embodiment, receiver 21 (shown in Figure 2) includes an analog comparator (not shown) that is used to compare the incoming signal to the receiver threshold. The incoming signal is compared to the receiver threshold to determine when data is being modulated on the incoming signal and to convert the incoming signal to digital data. For example, if the incoming signal voltage is greater than the receiver threshold, data is being modulated and the incoming signal voltage represents a logic "1" output. If the incoming signal voltage is less than the receiver threshold, no data is being modulated and the incoming signal voltage represents a logic "0" output. The identified carrier frequency and control data may be used to determine the type of remote control system associated with the original transmitter and whether the control data is fixed or rolling code.

At block 50, if the remote control system is a fixed code system, the fixed code and carrier frequency are stored in memory at block 52 for later retransmission during an operating mode of the trainable transmitter. If the control signal is a rolling code, at step 54, rolling code data (e.g., a rolling code algorithm and a carrier frequency) is retrieved from memory based on the identified type of remote control system and associated with the channel begin trained. Once the trainable transmitter channel is trained to a rolling code signal, a user initiates a training mode for the receiver of the remote control system at block 56. For example, a user may actuate an input device such as a button coupled to the remote control system receiver. At block 58, the remote control system receiver is trained by, for example, learning an identifier of the trainable transmitter and, for a rolling code system, synchronizing the counters of the trainable transmitter and the remote control system receiver. In an exemplary embodiment, a button on the trainable transmitter may be pressed, for example, two to three times, to transmit signals from the trainable transmitter to the receiver so that the receiver may learn the transmitter identifier, complete the synchronization of the receiver and trainable transmitter and confirm the training was successful. As mentioned previously, once trained, the trainable transmitter may be used to transmit control signals to control the remote control system.

While the exemplary embodiments illustrated in the FIGS. and described above are presently preferred, it should be understood that these embodiments are offered by way of example only. For example, alternative embodiments may be suitable for use in the commercial market, wherein office lights or security systems or parking garage doors are controlled. Accordingly, the present invention is not limited to a particular embodiment, but extends to various modifications that nevertheless fall within the scope of the appended claims. The order or sequence of any process or method steps may be varied or resequenced according to alternative embodiments.

## Claims

1. A method for determining a receiver threshold for a trainable transmitter (16), the method comprising:
receiving a request to enter a training mode from a user;
determining a noise level for a frequency range of a receiver (21) of the trainable transmitter; and
selecting a receiver threshold based on the noise level.

2. A method according to claim 1, wherein the noise level is an ambient RF noise level.

3. A method according to claim 1, wherein determining the noise level includes determining an average ambient RF noise level.

4. A method according to claim 1, further comprising providing the receiver threshold to the receiver of the trainable transmitter.

5. A method according to claim 4, wherein the receiver threshold is a threshold voltage signal.

6. A method according to claim 1, wherein the trainable transmitter is integrated in a vehicle.

7. A method according to claim 6, wherein the trainable transmitter is integrated in a vehicle interior element.

8. A trainable transmitter (16) comprising:
a receiver circuit (21) configured to receive signals; and
a control circuit (22) coupled to the receiver circuit and configured to determine a noise level for a frequency range of the receiver circuit and to select and provide a receiver threshold to the receiver circuit, the receiver threshold being variable based on the noise level.

9. A trainable transmitter according to claim 8, wherein the receiver threshold is a threshold voltage signal.

10. A trainable transmitter according to claim 8, wherein the noise level is an ambient RF noise level.

11. A trainable transmitter according to claim 8, wherein the control circuit is configured to determine an average ambient RF noise level for the frequency range of the receiver circuit.

12. A trainable transmitter according to claim 8, wherein the receiver circuit is included in a transceiver.

13. A trainable transmitter according to claim 8, further comprising:
a user input device coupled to the control circuit;
wherein the control circuit determines the noise level and selects a receiver threshold based on the noise level in response to actuation of the user input device.

14. A trainable transmitter according to claim 8, wherein the trainable transmitter is integrated in a vehicle.

15. A trainable transmitter according to claim 14, wherein the trainable transmitter is integrated in a vehicle interior element.

16. A method for training a trainable transmitter according to claim 1 and further comprising the steps of:
providing the receiver threshold to the receiver of the trainable transmitter; and
beginning the training mode of the trainable transmitter.

17. A method according to claim 16, wherein the noise level is an ambient RF noise level.

18. A method according to claim 16, wherein determining the noise level includes determining an average ambient RF noise level.

19. A method according to claim 16, wherein the training mode of the trainable transmitter comprises:
receiving a control signal from an original transmitter associated with a remote control system;
detecting a frequency and control data of the control signal; and
identifying a type of remote control system based on the frequency and control data of the control signal.

20. A method according to claim 16, wherein the trainable transmitter is integrated in a vehicle.

## Patentansprüche

1. Verfahren zum Bestimmen einer Empfängerschwelle für einen trainierbaren Sender (16), wobei das Verfahren die folgenden Schritte umfasst:
Empfangen einer Aufforderung von einem Benutzer, in einen Trainingsmodus einzutreten;
Bestimmen eines Rauschwerts für einen Frequenzbereich eines Empfängers (21) des trainierbaren Senders; und
Auswählen einer Empfängerschwelle auf der Basis des Rauschwerts.

2. Verfahren nach Anspruch 1, wobei der Rauschwert ein Umgebungs-HF-Rauschwert ist.

3. Verfahren nach Anspruch 1, wobei das Bestimmen des Rauschwerts das Bestimmen eines mittleren Umgebungs-HF-Rauschwerts umfasst.

4. Verfahren nach Anspruch 1, bei dem ferner die Empfängerschwelle dem Empfänger des trainierbaren Senders zugeführt wird.

5. Verfahren nach Anspruch 4, wobei die Empfängerschwelle ein Schwellenspannungssignal ist.

6. Verfahren nach Anspruch 1, wobei der trainierbare Sender in ein Fahrzeug integriert ist.

7. Verfahren nach Anspruch 6, wobei der trainierbare Sender in ein Fahrzeuginnenraumelement integriert ist.

8. Trainierbarer Sender (16), umfassend:
eine Empfängerschaltung (21), die dafür ausgelegt ist, Signale zu empfangen; und
eine mit der Empfängerschaltung gekoppelte Steuerschaltung (22), die dafür ausgelegt ist, einen Rauschwert für einen Frequenzbereich der Empfängerschaltung zu bestimmen und eine Empfängerschwelle auszuwählen und der Empfängerschaltung zuzuführen, wobei die Empfängerschwelle auf dem Rauschwert basiert.

9. Trainierbarer Sender nach Anspruch 8, wobei die Empfängerschwelle ein Schwellenspannungssignal ist.

10. Trainierbarer Sender nach Anspruch 8, wobei der Rauschwert ein Umgebungs-HF-Rauschwert ist.

11. Trainierbarer Sender nach Anspruch 8, wobei die Steuerschaltung dafür ausgelegt ist, einen mittleren Umgebungs-HF-Rauschwert für den Frequenzbereich der Empfängerschaltung zu bestimmen.

12. Trainierbarer Sender nach Anspruch 8, wobei die Empfängerschaltung in einem Sender/Empfänger enthalten ist.

13. Trainierbarer Sender nach Anspruch 8, ferner umfassend:
eine mit der Steuerschaltung gekoppelte Benutzereingabeeinrichtung;
wobei die Steuerschaltung als Reaktion auf Betätigung der Benutzereingabeeinrichtung den Rauschwert bestimmt und auf der Basis des Rauschwerts eine Empfängerschwelle auswählt.

14. Trainierbarer Sender nach Anspruch 8, wobei der trainierbare Sender in ein Fahrzeug integriert ist.

15. Trainierbarer Sender nach Anspruch 14, wobei der trainierbare Sender in ein Fahrzeuginnenraumelement integriert ist.

16. Verfahren zum Trainieren eines trainierbaren Senders nach Anspruch 1, ferner mit den folgenden Schritten:
die Empfängerschwelle wird dem Empfänger des trainierbaren Senders zugeführt; und
der Trainingsmodus des trainierbaren Senders wird bogonnen.

17. Verfahren nach Anspruch 16, wobei der Rauschwert ein Umgebungs-HF-Rauschwert ist.

18. Verfahren nach Anspruch 16, wobei das Bestimmen des Rauschwerts das Bestimmen eines mittleren Umgebungs-HF-Rauschwerts umfasst.

19. Verfahren nach Anspruch 16, wobei der Trainingsmodus des trainierbaren Senders Folgendes umfasst:
Empfangen eines Steuersignals von einem mit einem Fernbedienungssystem assoziierten Originalsender;
Detektieren einer Frequenz und von Steuerdaten des Steuersignals; und
Identifizieren eines Typs von Fernbedienungssystem auf der Basis der Frequenz und Steuerdaten des Steuersignals.

20. Verfahren nach Anspruch 16, wobei der trainierbare Sender in ein Fahrzeug integriert ist.

## Revendications

1. Procédé pour déterminer un seuil de récepteur pour un émetteur (16) capable d'apprentissage, le procédé comprenant :
la réception en provenance d'un utilisateur d'une demande de passage dans un mode d'apprentissage ;
la détermination d'un niveau de bruit pour une gamme de fréquences d'un récepteur (21) de l'émetteur capable d'apprentissage ; et
la sélection d'un seuil de récepteur sur la base du niveau de bruit.

2. Procédé selon la revendication 1, dans lequel le niveau de bruit est un niveau de bruit RF ambiant.

3. Procédé selon la revendication 1, dans lequel la détermination du niveau de bruit comprend la détermination d'un niveau de bruit RF ambiant moyen.

4. Procédé selon la revendication 1, comprenant en outre la fourniture du seuil de récepteur au récepteur de l'émetteur capable d'apprentissage.

5. Procédé selon la revendication 4, dans lequel le seuil de récepteur est un signal de tension de seuil.

6. Procédé selon la revendication 1, dans lequel l'émetteur capable d'apprentissage est intégré à un véhicule.

7. Procédé selon la revendication 6, dans lequel l'émetteur capable d'apprentissage est intégré à un élément intérieur d'un véhicule.

8. Emetteur capable d'apprentissage (16) comprenant :
un circuit récepteur (21) configuré pour redevoir des signaux ; et
un circuit de commande (22) relié au circuit récepteur et configuré pour déterminer un niveau de bruit pour une gamme de fréquences du circuit récepteur et pour sélectionner et fournir un seuil de récepteur au circuit récepteur, le seuil de récepteur étant variable sur la base du niveau de bruit.

9. Emetteur capable d'apprentissage selon la revendication 8, dans lequel le seuil de récepteur est un signal de tension de seuil.

10. Emetteur capable d'apprentissage selon la revendication 8, dans lequel le niveau de bruit est un niveau de bruit RF ambiant.

11. Emetteur capable d'apprentissage selon la revendication 8, dans lequel le circuit de commande est configuré pour déterminer un niveau de bruit RF ambiant moyen pour la gamme de fréquences du circuit récepteur.

12. Emetteur capable d'apprentissage selon la revendication 8, dans lequel le circuit récepteur fait partie d'un émetteur/récepteur.

13. Emetteur capable d'apprentissage selon la revendication 8, comprenant en outre :
un dispositif d'entrée d'utilisateur relié au circuit de commande ;
dans lequel le circuit de commande détermine le niveau de bruit et sélectionne un seuil de récepteur sur la base du niveau de bruit en réponse à l'actionnement du dispositif d'entrée d'utilisateur.

14. Emetteur capable d'apprentissage selon la revendication 8, dans lequel l'émetteur capable d'apprentissage est intégré à un véhicule.

15. Emetteur capable d'apprentissage selon la revendication 14, dans lequel l'émetteur capable d'apprentissage est intégré à un élément intérieur d'un véhicule.

16. Procédé d'apprentissage d'un émetteur capable d'apprentissage selon la revendication 1, et comprenant en outre les étapes de :
fourniture du seuil de récepteur au récepteur de l'émetteur capable d'apprentissage ; et
lancement du mode d'apprentissage de l'émetteur capable d'apprentissage.

17. Procédé selon la revendication 16, dans lequel le niveau de bruit est un niveau de bruit RF ambiant.

18. Procédé selon la revendication 16, dans lequel la détermination du niveau de bruit comprend la détermination d'un niveau de bruit RF ambiant moyen.

19. Procédé selon la revendication 16, dans lequel le mode d'apprentissage de l'émetteur capable d'apprentissage comprend :
la réception d'un signal de commande d'un émetteur original associé à un système de télécommande ;
la détection d'une fréquence et de données de commande du signal de commande ; et
l'identification d'un type de système de télécommande sur la base de la fréquence et de données de commande du signal de commande.

20. Procédé selon la revendication 16, dans lequel l'émetteur capable d'apprentissage est intégré à un véhicule.
